# EUROPEAN PATENT APPLICATION

(11) **EP 1 801 767 A1**
(43) Date of publication of application: **27.06.2007**
(21) Application number: 05112982.3
(22) Date of filing: 23.12.2005
(51) Int. Cl.: G09G 3/20

(54) **Method and device for setting or varying properties of elements on a visual display based on ambient light**

(71) Applicant: Research In Motion Limited, Waterloo, Ontario N2L 3W8 (CA)
(72) Inventor: Ladouceur, Norman, Waterloo, Ontario N2T 1A2 (CA)
(74) Representative: Rickard, David John

(57) **Abstract**

A method and device for setting or varying properties of display elements on a visual display based on characteristics of ambient light. A light sensor is used to sense ambient light; a processor analyzes the ambient light data from the sensor to determine if there are variations in the characteristics of ambient light, and if so, sets or varies the values of the properties of display elements such as text size, image size, text colour and/or image colour. A driver applies the set or varied values of these properties to the display elements, and the visual display displays the display elements.

## Description

This invention relates to visual displays. In particular, this invention relates to a method and device for setting or varying properties of elements on a visual display based on characteristics of ambient light.

In settings where low ambient light levels exist, users may have difficulty reading information on a visual display such as a liquid crystal diode (LCD) display. Users with poor vision need either larger text or more light to read text in darker ambient environments. Turning on backlighting or making the backlight brighter helps to overcome this problem by increasing the contrast between the text and the display background, but this consumes power at a higher rate and is therefore disadvantageous in battery-operated devices such as hand-held communications devices.

Furthermore, different types of ambient light (fluorescent, incandescent, natural sunlight, coloured light) have different spectral compositions. The true colour of display elements on a visual display is only apparent when viewed in white light. Thus, the extent to which display elements can be distinguished from the display background is to some extent dependent upon the spectral composition of the ambient light, which will vary.

It would accordingly be advantageous to provide a method and device to enhance readability in low ambient light environments that did not increase power consumption. It would further be advantageous to provide a method and device to vary display elements in a non-white ambient light environment so that the display elements as viewed by the user appear in their true colours.

An aspect of the invention provides a method and device for setting or varying properties of the elements displayed on a visual display based on characteristics of ambient light, by sensing ambient light, analyzing the characteristics of the ambient light and setting or varying the values of the properties of display elements such as text size, image size, text colour and/or image colour. A driver applies the set or varied values of these properties to the display elements, and the visual display displays the display elements.

An aspect of the invention provides a method for setting or varying at least one property of at least one display element on a visual display based on at least one characteristic of ambient light, the method comprising the steps of: a. sensing at least one characteristic of ambient light; and b. setting or varying at least one property of at least one display element on the visual display based on the at least one characteristic of ambient light.

A further aspect of the invention provides a device for setting or varying at least one property of at least one display element on a visual display based on at least one characteristic of ambient light, comprising a light sensor for sensing a characteristic of the ambient light, at least one processor, for determining the at least one characteristic of ambient light and setting or varying at least one property of at least one display element based on at least one characteristic of ambient light, at least one driver for applying the at least one property to the at least one display element, and at least one visual display for displaying the at least one display element.

A further aspect of the invention provides a computer program product for use with a computer, the computer program product comprising a computer usable medium having computer readable program code means embodied in the medium for setting or varying at least one property of at least one display element on a visual display based on at least one characteristic of ambient light, the computer program product having a. computer readable program code means for determining the at least one characteristic of the ambient light from an output of a light sensor, b. computer readable program code means for setting or varying the at least one property of the at least one display element based on the at least one characteristic of the ambient light, and c. computer readable program code means for applying the at least one property to the at least one display element.

### Brief Description of the Drawings

In drawings which illustrate a preferred embodiment by way of example only,
Figure 1 is a schematic diagram of a communication system in which a portable communication device embodying aspects of the invention may be used.
Figure 2 is a block diagram of a further example communication system including multiple networks and multiple mobile communication devices.
Figure 3 is a block diagram of a wireless mobile device usable in the example communication system.
Figure 4a is a frontal view of the exterior of a device embodying an aspect of the invention.
Figure 4b is a schematic diagram of a device embodying an aspect of the invention.
Figure 5 is a flowchart of a method for setting or varying properties of display elements on a visual display based on characteristics of ambient light.

### Description of Preferred Embodiments

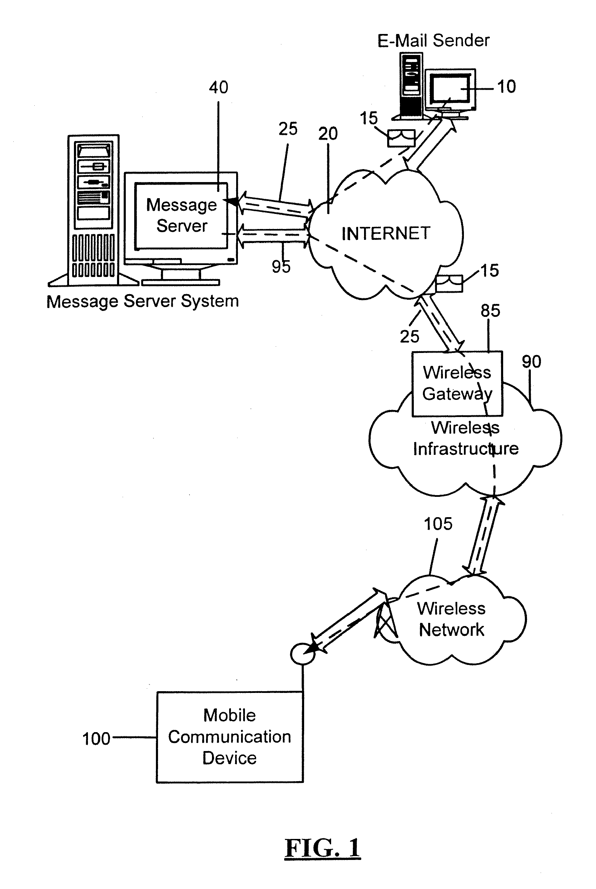

There are many types of devices in which the preferred embodiment may be used, one example being a wireless communications device 100. Figure 1 is an overview of an example communication system in which a wireless communication device 100 may be used. One skilled in the art will appreciate that there may be other different topologies, but the system shown in Figure 1 helps demonstrate the operation of the message processing systems and methods described in the present application. There may also be many message senders and recipients. The simple system shown in Figure 1 is for illustrative purposes only.

Figure 1 shows an e-mail sender 10, the Internet 20, a message server system 40, a wireless gateway 85, wireless infrastructure 90, a wireless network 105 and a mobile communication device 100.

An e-mail sender system 10 may, for example, be connected to an ISP (Internet Service Provider) on which a user of the system 10 has an account, located within a company, possibly connected to a local area network (LAN), and connected to the Internet 20, or connected to the Internet 20 through a large ASP (application service provider) such as America Online (AOL). Those skilled in the art will appreciate that the systems shown in Figure 1 may instead be connected to a wide area network (WAN) other than the Internet, although e-mail transfers are commonly accomplished through Internet-connected arrangements as shown in Figure 1.

The message server 40 may be implemented, for example, on a network computer within the firewall of a corporation, a computer within an ISP or ASP system or the like, and acts as the main interface for e-mail exchange over the Internet 20. Although other messaging systems might not require a message server system 40, a mobile device 100 configured for receiving and possibly sending e-mail will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in Figure 1, as they do not directly play a role in the message processing described below. Message servers such as server 40 typically extend beyond just e-mail sending and receiving; they also include dynamic database storage engines that have predefined database formats for data like calendars, to-do lists, task lists, e-mail and documentation.

The wireless gateway 85 and infrastructure 90 provide a link between the Internet 20 and wireless network 105. The wireless infrastructure 90 determines the most likely network for locating a given user and tracks the user as they roam between countries or networks. A message is then delivered to the mobile device 100 via wireless transmission, typically at a radio frequency (RF), from a base station in the wireless network 105 to the mobile device 100. The particular network 105 may be virtually any wireless network over which messages may be exchanged with a mobile communication device.

As shown in Figure 1, a composed e-mail message 15 is sent by the e-mail sender 10, located somewhere on the Internet 20. This message 15 is normally fully in the clear and uses traditional Simple Mail Transfer Protocol (SMTP), RFC 2822 (Request for Comment 2822 published by the Internet Society, "Internet Message Format"), headers and Multipurpose Internet Mail Extension (MIME) body parts to define the format of the mail message. These techniques are known to those skilled in the art. The message 15 arrives at the message server 40 and is normally stored in a message store. In a preferred embodiment described in further detail below, messages addressed to a message server account associated with a host system such as a home computer or office computer which belongs to the user of a mobile device 100 are redirected from the message server 40 to the mobile device 100 as they are received.

Regardless of the specific mechanism controlling the forwarding of messages to the mobile device 100, the message 15, or possibly a translated or reformatted version thereof, is sent to the wireless gateway 85. The wireless infrastructure 90 includes a series of connections to wireless network 105. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Groupe Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric networks include the MobitexTM Radio Network and the DataTAC^{™} Radio Network. Examples of older voice-centric data networks include Personal Communication Systems (PCS) networks like GSM, and TDMA systems.

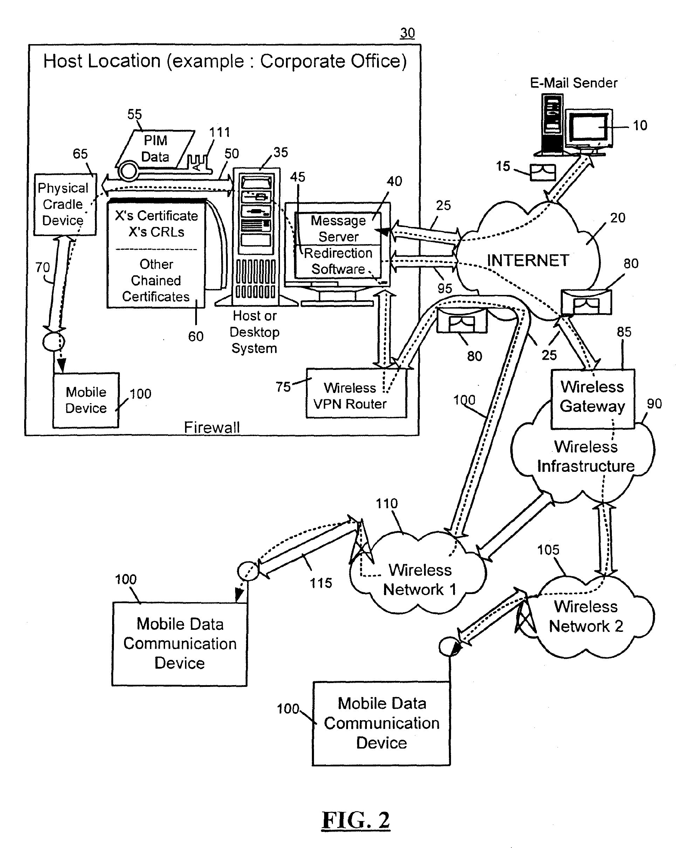

Figure 2 is a block diagram of a further example communication system including multiple networks and multiple mobile communication devices. The system of Figure 2 is substantially similar to the Figure 1 system, but includes a host system 30, a redirection program 45, a mobile device cradle 65, a wireless virtual private network (VPN) router 75, an additional wireless network 110 and multiple mobile communication devices 100. As described above in conjunction with Figure 1, Figure 2 represents an overview of a sample network topology. Although the message processing systems and methods described herein may be applied to networks having many different topologies, the network of Figure 2 is useful in understanding an automatic e-mail redirection system mentioned briefly above.

The central host system 30 will typically be a corporate office or other LAN, but may instead be a home office computer or some other private system where mail messages are being exchanged. Within the host system 30 is the message server 40, running on a computer within the firewall of the host system that acts as the main interface for the host system to exchange e-mail with the Internet 20. In the system of Figure 2, the redirection program 45 enables redirection of data items from the server 40 to a mobile communication device 100. Although the redirection program 45 is shown to reside on the same machine as the message server 40 for ease of presentation, there is no requirement that it must reside on the message server. The redirection program 45 and the message server 40 are designed to co-operate and interact to allow the pushing of information to mobile devices 100. In this installation, the redirection program 45 takes confidential and non-confidential corporate information for a specific user and redirects it out through the corporate firewall to mobile devices 100. A more detailed description of the redirection software 45 may be found in the commonly assigned United States Patent 6,219,694 ("the '694 Patent"), entitled "System and Method for Pushing Information From A Host System To A Mobile Data Communication Device Having A Shared Electronic Address", and issued to the assignee of the instant application on April 17, 2001, which is hereby incorporated into the present application by reference. This push technique may use a wireless friendly encoding, compression and encryption technique to deliver all information to a mobile device, thus effectively extending the security firewall to include each mobile device 100 associated with the host system 30.

As shown in Figure 2, there may be many alternative paths for getting information to the mobile device 100. One method for loading information onto the mobile device 100 is through a port designated 50, using a device cradle 65. This method tends to be useful for bulk information updates often performed at initialization of a mobile device 100 with the host system 30 or a computer 35 within the system 30. The other main method for data exchange is over-the-air using wireless networks to deliver the information. As shown in Figure 2, this may be accomplished through a wireless VPN router 75 or through a traditional Internet connection 95 to a wireless gateway 85 and a wireless infrastructure 90, as described above. A VPN connection could be established directly through a specific wireless network 110 to a mobile device 100. The possibility of using a wireless VPN router 75 is contemplated to be used with Internet Protocol (IP) Version 6 (IPV6) on IP-based wireless networks. This protocol will provide enough IP addresses to dedicate an IP address to every mobile device 100 and thus make it possible to push information to a mobile device 100 at any time. A principal advantage of using this wireless VPN router 75 is that it could be an off-the-shelf VPN component, thus it would not require a separate wireless gateway 85 and wireless infrastructure 90 to be used. A VPN connection would preferably be a Transmission Control Protocol (TCP)/IP or User Datagram Protocol (UDP)/IP connection to deliver the messages directly to the mobile device 100. If a wireless VPN 75 is not available then a link 95 to the Internet 20 is the most common connection mechanism available and has been described above.

In the automatic redirection system of Figure 2, a composed e-mail message 15 leaving the e-mail sender 10 arrives at the message server 40 and is redirected by the redirection program 45 to the mobile device 100. As this redirection takes place the message 15 is re-enveloped, as indicated at 80, and a possibly proprietary compression and encryption algorithm can then be applied to the original message 15. In this way, messages being read on the mobile device 100 are no less secure than if they were read on a desktop workstation such as 35 within the firewall. All messages exchanged between the redirection program 45 and the mobile device 100 preferably use this message repackaging technique. Another goal of this outer envelope is to maintain the addressing information of the original message except the sender's and the receiver's address. This allows reply messages to reach the appropriate destination, and also allows the "from" field to reflect the mobile user's desktop address. Using the user's e-mail address from the mobile device 100 allows the received message to appear as though the message originated from the user's desktop system 35 rather than the mobile device 100.

With reference back to the port 50 and cradle 65 connectivity to the mobile device 100, this connection path offers many advantages for enabling one-time data exchange of large items. For those skilled in the art of personal digital assistants (PDAs) and synchronization, the most common data exchanged over this link is Personal Information Management (PIM) data 55. When exchanged for the first time this data tends to be large in quantity, bulky in nature and requires a large bandwidth to get loaded onto the mobile device 100 where it can be used on the road. This serial link may also be used for other purposes, including setting up a private security key 111 such as an S/MIME or PGP (Pretty Good Privacy data encryption) specific private key, the Certificate (Cert) of the user and their Certificate Revocation Lists (CRLs) 60. The private key is preferably exchanged so that the desktop 35 and mobile device 100 share one personality and one method for accessing all mail. The Cert and CRLs are normally exchanged over such a link because they represent a large amount of the data that is required by the device for S/MIME, PGP and other public key security methods.

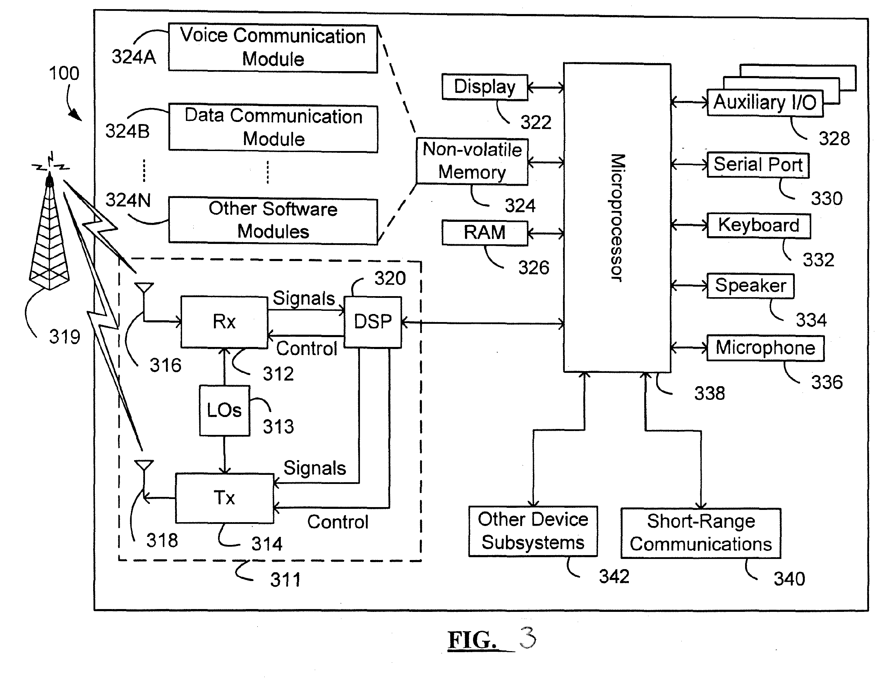

The preferred embodiment may be used with many different computers and devices, such as a wireless mobile communications device shown in Figure 3. With reference to Figure 3, the mobile device 100 is a dual-mode mobile device and includes a transceiver 311, a microprocessor 338, a display 322, non-volatile memory 324, random access memory (RAM) 326, one or more auxiliary input/output (I/O) devices 328, a serial port 330, an input device, such as a keyboard 332, a speaker 334, a microphone 336, a short-range wireless communications sub-system 340, and other device sub-systems 342.

The transceiver 311 includes a receiver 312, a transmitter 314, antennas 316 and 318, one or more local oscillators 313, and a digital signal processor (DSP) 320. The antennas 316 and 318 may be antenna elements of a multiple-element antenna, and are preferably embedded antennas. However, the systems and methods described herein are in no way restricted to a particular type of antenna, or even to wireless communication devices.

The mobile device 100 is preferably a two-way communication device having voice and data communication capabilities. Thus, for example, the mobile device 100 may communicate over a voice network, such as any of the analog or digital cellular networks, and may also communicate over a data network. The voice and data networks are depicted in Figure 3 by the communication tower 319. These voice and data networks may be separate communication networks using separate infrastructure, such as base stations, network controllers, etc., or they may be integrated into a single wireless network.

The transceiver 311 is used to communicate with the network 319, and includes the receiver 312, the transmitter 314, the one or more local oscillators 313 and the DSP 320. The DSP 320 is used to send and receive signals to and from the transceivers 316 and 318, and also provides control information to the receiver 312 and the transmitter 314. If the voice and data communications occur at a single frequency, or closely-spaced sets of frequencies, then a single local oscillator 313 may be used in conjunction with the receiver 312 and the transmitter 314. Alternatively, if different frequencies are utilized for voice communications versus data communications for example, then a plurality of local oscillators 313 can be used to generate a plurality of frequencies corresponding to the voice and data networks 319. Information, which includes both voice and data information, is communicated to and from the transceiver 311 via a link between the DSP 320 and the microprocessor 338.

The detailed design of the transceiver 311, such as frequency band, component selection, power level, etc., will be dependent upon the communication network 319 in which the mobile device 100 is intended to operate. For example, a mobile device 100 intended to operate in a North American market may include a transceiver 311 designed to operate with any of a variety of voice communication networks, such as the Mobitex or DataTAC mobile data communication networks, AMPS, TDMA, CDMA, PCS, etc., whereas a mobile device 100 intended for use in Europe may be configured to operate with the GPRS data communication network and the GSM voice communication network. Other types of data and voice networks, both separate and integrated, may also be utilized with a mobile device 100.

Depending upon the type of network or networks 319, the access requirements for the mobile device 100 may also vary. For example, in the Mobitex and DataTAC data networks, mobile devices are registered on the network using a unique identification number associated with each mobile device. In GPRS data networks, however, network access is associated with a subscriber or user of a mobile device. A GPRS device typically requires a subscriber identity module ("SIM"), which is required in order to operate a mobile device on a GPRS network. Local or non-network communication functions (if any) may be operable, without the SIM device, but a mobile device will be unable to carry out any functions involving communications over the data network 319, other than any legally required operations, such as '911' emergency calling.

After any required network registration or activation procedures have been completed, the mobile device 100 may send and receive communication signals, including both voice and data signals, over the networks 319. Signals received by the antenna 316 from the communication network 319 are routed to the receiver 312, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 320. In a similar manner, signals to be transmitted to the network 319 are processed, including modulation and encoding, for example, by the DSP 320 and are then provided to the transmitter 314 for digital to analog conversion, frequency up conversion, filtering, amplification and transmission to the communication network 319 via the antenna 318.

In addition to processing the communication signals, the DSP 320 also provides for transceiver control. For example, the gain levels applied to communication signals in the receiver 312 and the transmitter 314 may be adaptively controlled through automatic gain control algorithms implemented in the DSP 320. Other transceiver control algorithms could also be implemented in the DSP 320 in order to provide more sophisticated control of the transceiver 311.

The microprocessor 338 preferably manages and controls the overall operation of the mobile device 100. Many types of microprocessors or microcontrollers could be used here, or, alternatively, a single DSP 320 could be used to carry out the functions of the microprocessor 338. Low-level communication functions, including at least data and voice communications, are performed through the DSP 320 in the transceiver 311. Other, high-level communication applications, such as a voice communication application 324A, and a data communication application 324B may be stored in the non-volatile memory 324 for execution by the microprocessor 338. For example, the voice communication module 324A may provide a high-level user interface operable to transmit and receive voice calls between the mobile device 100 and a plurality of other voice or dual-mode devices via the network 319. Similarly, the data communication module 324B may provide a high-level user interface operable for sending and receiving data, such as e-mail messages, files, organizer information, short text messages, etc., between the mobile device 100 and a plurality of other data devices via the networks 319. The microprocessor 338 also interacts with other device subsystems, such as the display 322, the RAM 326, the auxiliary input/output (I/O) subsystems 328, the serial port 330, the keyboard 332, the speaker 334, the microphone 336, the short-range communications subsystem 340 and any other device subsystems generally designated as 342.

Some of the subsystems shown in Figure 3 perform communication-related functions, whereas other subsystems may provide "resident" or on-device functions. Notably, some subsystems, such as the keyboard 332 and the display 322 may be used for both communication-related functions, such as entering a text message for transmission over a data communication network, and device-resident functions such as a calculator or task list or other PDA type functions.

Operating system software used by the microprocessor 338 is preferably stored in a persistent store such as non-volatile memory 324. The non-volatile memory 324 may be implemented, for example, as a Flash memory component, or as battery backed-up RAM. In addition to the operating system, which controls low-level functions of the mobile device 310, the non-volatile memory 324 includes a plurality of software modules 324A-324N that can be executed by the microprocessor 338 (and/or the DSP 320), including a voice communication module 324A, a data communication module 324B, and a plurality of other operational modules 324N for carrying out a plurality of other functions. These modules are executed by the microprocessor 338 and provide a high-level interface between a user and the mobile device 100. This interface typically includes a graphical component provided through the display 322, and an input/output component provided through the auxiliary I/O 328, keyboard 332, speaker 334, and microphone 336. The operating system, specific device applications or modules, or parts thereof, may be temporarily loaded into a volatile store, such as RAM 326 for faster operation. Moreover, received communication signals may also be temporarily stored to RAM 326, before permanently writing them to a file system located in a persistent store such as the Flash memory 324.

An exemplary application module 324N that may be loaded onto the mobile device 100 is a personal information manager (PIM) application providing PDA functionality, such as calendar events, appointments, and task items. This module 324N may also interact with the voice communication module 324A for managing phone calls, voice mails, etc., and may also interact with the data communication module for managing e-mail communications and other data transmissions. Alternatively, all of the functionality of the voice communication module 324A and the data communication module 324B may be integrated into the PIM module.

The non-volatile memory 324 preferably also provides a file system to facilitate storage of PIM data items on the device. The PIM application preferably includes the ability to send and receive data items, either by itself, or in conjunction with the voice and data communication modules 324A, 324B, via the wireless networks 319. The PIM data items are preferably seamlessly integrated, synchronized and updated, via the wireless networks 319, with a corresponding set of data items stored or associated with a host computer system, thereby creating a mirrored system for data items associated with a particular user.

Context objects representing at least partially decoded data items, as well as fully decoded data items, are preferably stored on the mobile device 100 in a volatile and non-persistent store such as the RAM 326. Such information may instead be stored in the non-volatile memory 324, for example, when storage intervals are relatively short, such that the information is removed from memory soon after it is stored. However, storage of this information in the RAM 326 or another volatile and non-persistent store is preferred, in order to ensure that the information is erased from memory when the mobile device 100 loses power. This prevents an unauthorized party from obtaining any stored decoded or partially decoded information by removing a memory chip from the mobile device 100, for example.

The mobile device 100 may be manually synchronized with a host system by placing the device 100 in an interface cradle, which couples the serial port 330 of the mobile device 100 to the serial port of a computer system or device. The serial port 330 may also be used to enable a user to set preferences through an external device or software application, or to download other application modules 324N for installation. This wired download path may be used to load an encryption key onto the device, which is a more secure method than exchanging encryption information via the wireless network 319. Interfaces for other wired download paths may be provided in the mobile device 100, in addition to or instead of the serial port 330. For example, a USB port would provide an interface to a similarly equipped personal computer.

Additional application modules 324N may be loaded onto the mobile device 100 through the networks 319, through an auxiliary I/O subsystem 328, through the serial port 330, through the short-range communications subsystem 340, or through any other suitable subsystem 342, and installed by a user in the non-volatile memory 324 or RAM 326. Such flexibility in application installation increases the functionality of the mobile device 100 and may provide enhanced on-device functions, communication-related functions, or both. For example, secure communication applications may enable electronic commerce functions and other such financial transactions to be performed using the mobile device 100.

When the mobile device 100 is operating in a data communication mode, a received signal, such as a text message or a web page download, is processed by the transceiver module 311 and provided to the microprocessor 338, which preferably further processes the received signal in multiple stages as described above, for eventual output to the display 322, or, alternatively, to an auxiliary I/O device 328. A user of mobile device 100 may also compose data items, such as e-mail messages, using the keyboard 332, which is preferably a complete alphanumeric keyboard laid out in the QWERTY style, although other styles of complete alphanumeric keyboards such as the known DVORAK style may also be used. User input to the mobile device 100 is further enhanced with a plurality of auxiliary I/O devices 328, which may include a thumbwheel input device, a touchpad, a variety of switches, a rocker input switch, etc. The composed data items input by the user may then be transmitted over the communication networks 319 via the transceiver module 311.

When the mobile device 100 is operating in a voice communication mode, the overall operation of the mobile device is substantially similar to the data mode, except that received signals are preferably be output to the speaker 334 and voice signals for transmission are generated by a microphone 336. Alternative voice or audio I/O subsystems, such as a voice message recording subsystem, may also be implemented on the mobile device 100. Although voice or audio signal output is preferably accomplished primarily through the speaker 334, the display 322 may also be used to provide an indication of the identity of a calling party, the duration of a voice call, or other voice call related information. For example, the microprocessor 338, in conjunction with the voice communication module and the operating system software, may detect the caller identification information of an incoming voice call and display it on the display 322.

A short-range communications subsystem 340 is also included in the mobile device 100. The subsystem 340 may include an infrared device and associated circuits and components, or a short-range RF communication module such as a Bluetooth^{™} module or an 802.11 module, for example, to provide for communication with similarly-enabled systems and devices. Those skilled in the art will appreciate that "Bluetooth" and "802.11" refer to sets of specifications, available from the Institute of Electrical and Electronics Engineers, relating to wireless personal area networks and wireless local area networks, respectively.

In a preferred embodiment data may be stored in one or more data stores. The data stores can be of many different types of storage devices and programming constructs, such as RAM, ROM, Flash memory, programming data structures, programming variables, etc. It is noted that data structures describe formats for use in organizing and storing data in databases, programs, memory, or other computer-readable media for use by a computer program.

The preferred embodiment may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

The device comprises a processor 338 operatively connected to a visual display 322 and a light sensor 410. The device may for example be a mobile battery-operated communication device 100, in which the preferred embodiment is most advantageously implemented, but may alternatively be any other type of device having a visual display 322 for displaying display elements 2 such as text 2a and images 2b.

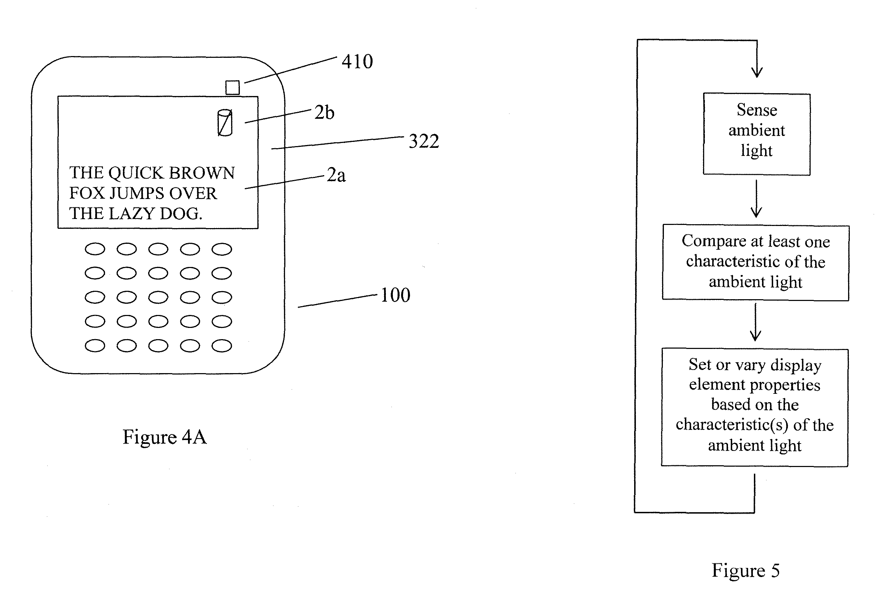

Figure 4a is a front elevational view of the exterior of a device 100 embodying the preferred embodiment. As shown in Figure 4a, the device 100 includes a at least one light sensor 410 preferably disposed in close proximity to the display 322, so as to measure the ambient light as close as possible to the display 322. The light sensor 410 may comprise an intensity-measuring device such as a photodetector, for example a photoresistor or photodiode, that is responsive to optical input and is used for the conversion of light into an electrical signal. Such sensors produce current output as a function of the intensity of received light, with an operating range that varies depending on the manufacturer. Most preferably each light sensor comprises a photoresistor, such as those made of cadmium sulfide (CdS) and commonly found in camera light meters. Where a higher sensitivity to ambient light is desired, a phototransitor may be preferable for use as a light sensor.

The display 322 according to a preferred embodiment comprises a liquid crystal diode (LCD) screen. Those skilled in the art will appreciate that the preferred embodiment may be implemented with any display unit including projector display units and any combination of CRT, multi-point light emitting diodes (LEDs), organing light emitting diodes (OLEDs), polymer organic light emitting diodes (PLEDs), plasma display panels (PDPs), liquid crystal displays (LCDs), twisted nematic liquid crystal displays (TNLCDs), super twisted nematic liquid crystal displays (STNLCDs), thin film transistor liquid crystal displays (TFTLCDs), or single-point LED or OLED, PLED, bulb, or other visual display unit that converts electric energy into optical energy. The display 322 is capable of displaying a plurality of display elements, such as images or blocks of text.

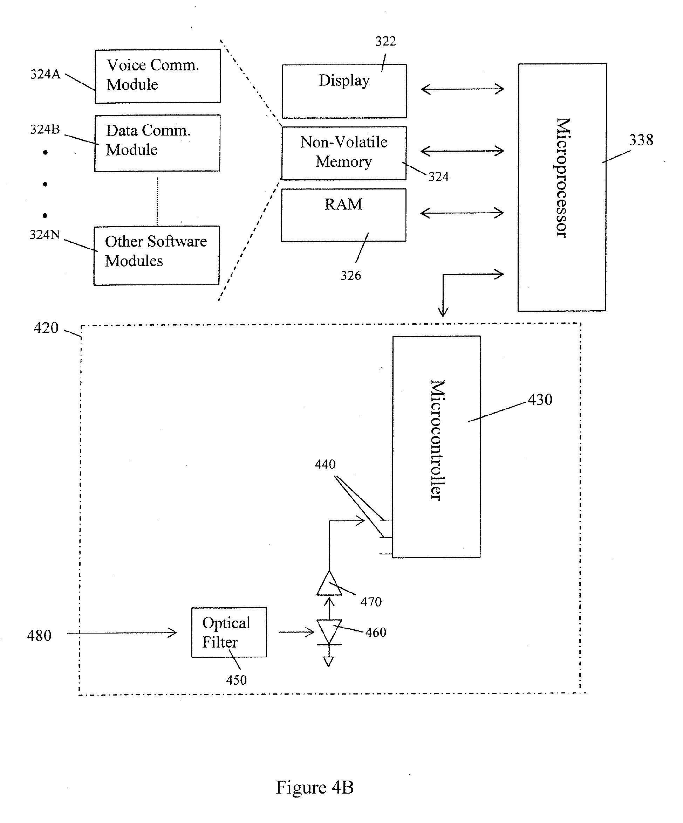

In the device embodying the preferred embodiment, as shown in Figure 4b, the microprocessor 338 is coupled to an optical subsystem 420 (one of the other device subsystems 342 shown in Figure 3). The preferred embodiment of the optical subsystem 420 allows not only for determination of ambient light intensity, but also for spectrum analysis, which is discussed below. The optical subsystem 420 comprises a microcontroller 430 comprising a sufficient number of analog input pins 440 to receive input from each light sensor 410 included in the device 100. Ambient light enters at light sensor 410, as shown in Figure 4a, as optical input 480 in Figure 4b. In the preferred embodiment the light first passes through optical filter 450, which separates the incoming light into its individual spectral components. The photodetector 460 then converts the optical signal to an electrical current proportional to the incident optical power. The current from the photodetector is then converted to a voltage by the transimpedance amplifier 470.

The microcontroller 430 preferably comprises an analog-to-digital converter (ADC) for converting the analog input voltage received at each of the analog input pins 440 to a digital value. Alternatively, voltage comparators (not shown) may be used (instead of an ADC) having reference voltages corresponding to the thresholds between the light intensity states detailed below. It will be appreciated that the optical filter 450 allows for the measurement an additional characteristic of the ambient light, its spectral composition, but is unnecessary in the case where only the overall intensity of the ambient light is of concern.

The device 100 further comprises a memory, such as non-volatile memory 324, which stores a video driver for operating the display 322. The video driver applies display element properties, such as text sizing, image sizing, text colour and image colour, to the various display elements to be displayed on the display 322. Colour on the display 322 is generated by the video driver applying specific values of hue, luminance and saturation (hue includes black and white, the various shades of grey therebetween being determined by luminance and saturation) to a group of pixels forming the display element on the display 322. The video driver is controlled by the microprocessor 338 which sets or varies the properties of display elements 2 based on a variation in the characteristics of the ambient light and instructs the video driver to refresh these display elements 2 on the display 322 according to their modified display element properties.

A variation in the state of a measured characteristic of ambient light is determined by any means suitable to the characteristic under consideration. The ambient light data received by microcontroller 430 can be analysed by any processor in the device 100, such as the microcontroller 430 itself, or the microprocessor 338 or DSP 320 (both of which are operatively coupled to the microcontroller 430). The processing device used may depend on the characteristic being measured, the capabilities of each device and/or its relative idleness. For example, if it is desired to sense light intensity only, a simple calculation is required and it is convenient to perform the operation in microcontroller 430. The current state of the intensity of the ambient light is determined by comparing the output voltage of the optical subsystem 420 with one or more fixed reference values to derive a state. This state information is compared with the previous state. If there has been a transition between states, the state information is forwarded to the microprocessor 338. The microprocessor 338 then determines, based on its programmed rule set, whether the state transition should trigger any variations in display element properties. If one or more variations in display element properties are required based on the degree of change in one or more characteristics of the ambient light, the microprocessor 338 instructs the video driver to apply the revised display element properties to the display elements 2 and to refresh the display 332. Operations relating to optical parameters are contained within software modules 324A, 324B...324-N contained in non-volatile memory 324 and accessible to the microprocessor 338.

In the preferred embodiment, states are chosen to correspond to particular ranges of the intensity of ambient light. Particular text and image sizes are chosen to correspond to each state. States, intensity ranges, text and image sizes may be selected as deemed suitable by those skilled in the art. Typically, text size and image size are varied inversely proportional to variations in the light intensity. In the preferred embodiment these settings would be selectable and programmable by the user, with a preset default setting. The following states, intensity ranges, text and image sizes, shown solely by way of non-limiting example, may be used for the default setting:

| State | Light Intensity | Text Size | Image Size |
|---|---|---|---|
| Darkness | 0 to 200 lux | +2 points | 117% |
| Normal | 200 to 10,000 lux | no change | 100% |
| Bright | 10,000+ lux | -2 points | 83% |

It is also possible to vary the boldness of the text or change the text colour, either in addition to, or as an alternative to, varying the font size. In these cases as well the degree of variance is selected to compensate for changes in ambient light, to optimize the visibility of the display elements. Modifications to text size are normally brought about by changing the font size of text in a display element 2a as is well known to those skilled in the art. The variation is applied to a base display font size, which is the immediately preceding font size setting. This may be the default font size or an alternate font size selected by the user or a previous setting based on ambient light levels. Image size may be increased or decreased through interpolation (i.e. increasing or decreasing pixel dimensions) of the original image. Any suitable interpolation function, such as nearest neighbour, bilinear, or bicubic may be used, having regard to resulting image quality and computational cost. Sharpening and/or smoothing techniques may also be applied to resized images to improve image quality, if necessary.

In the preferred embodiment, in addition to measuring intensity, a spectrum analysis of the signal received at microcontroller 430 is performed by microprocessor 338, DSP 320, or microcontroller 430. In this embodiment the light sensor 410 may be a camera. Again, which particular processing device is used for this operation may depend on the capabilities of each processor and/or its relative idleness in the operation of the device 100. The spectrum analysis generates data on the intensities of selected wavelengths of the ambient light received at optical input 480. The processing device uses this information to generate a particular combination of hue, luminance and saturation that represents the spectrum of the ambient light. Preferably, the microprocessor 338 fetches the hue, luminance and saturation values from a lookup table using intensity values at particular wavelengths. The hue, luminance and/or saturation of the display element 2 can be varied, according to a series of algorithms or values in a lookup table, to compensate for the spectral composition of the ambient light and thus display the display elements 2 in a colour that will be perceived by the user as more accurately reflecting the true colour of the display elements 2.

For example, white light allows a viewer to see objects in their true colour, but in all other colours of ambient light, objects are not seen by the viewer in their true colour because of the manner in which colours are absorbed and reflected by the display 322. However, a digital colour filter 450 may be used to correct for the effects of non-white ambient light. This allows the viewer to see the display in its true colour. For example, when the ambient light is blue, an orange filter may be applied to objects so that they appear to the viewer in their true colour.

According to the preferred embodiment, the microprocessor 338 determines the corresponding hue, luminance and saturation that should be applied to the display elements so that the viewer may see the display elements in their true colour, having regard to the spectral composition of the ambient light. Preferably, the microprocessor 338 fetches the hue, luminance and saturation values for the display elements 2 from a lookup table using the hue, luminance and saturation values of the ambient light. Once the desired colour for the display elements 2 is determined, text colour may be modified by changing the font colour of text in a display element 2. Image colour may be modified by applying a digital colour filter to an image, as is well known in digital image processing. In this embodiment the hue, luminance and saturation values for the display elements 2 are typically set, based on the retrieved lookup table values, without reference to the immediately preceding values for hue, luminance and saturation.

In the most preferred embodiment, the adjustment of display element properties occurs automatically when the light sensor is enabled, as may be set in the operating system of the device. Nevertheless, device users can also manually adjust the sizing and colours of text and images which will override these automatic adjustments. Optionally, the operating system could learn, through the use of artificial intelligence techniques such as machine learning, from the user's manual adjustment of display element properties in various ambient light environments to create more personalized automatic settings over time.

In operation, upon startup the microprocessor 338 is set to a base display font size, hue, luminance, intensity etc. which may be the device's default font size or an alternate font size selected by the user; or a setting determined by the device 100 on startup based on ambient light levels in accordance with the preferred embodiment. The method is then repeatedly applied to change the font size, intensity, colour or otherwise in response to changes in ambient light. Figure 5 shows by way of example a method for setting or varying the properties of display elements 2 on the visual display 322 based on the characteristics of the ambient light. In the first step at least one characteristic of the ambient light is sensed. The second step compares the at least one characteristic of the ambient light, for example intensity and/or spectral composition, against a reference value stored in the memory 324. Based on the characteristic so determined, the display 322 is then refreshed with at least one property of at least one display element 2 on the display 322 varied based on, and in the preferred embodiment proportional to, a variation detected in the measured characteristic(s) of the ambient light. The variation is applied to the base setting, which may be the startup setting or an altered setting based on a previous change in ambient light. The changes in text or image sizing are thus applied to the immediately preceding font size setting, and the varied setting becomes the base setting for applying further changes. The repetition rate of the method is a matter of selection. It will be appreciated that the display background can also be considered to be a display element, the hue, luminance and saturation of which can be varied as ambient light levels change to increase the contrast with other display elements 2 such as text 2a and images 2b.

Various embodiments having been thus described in detail by way of example, it will be apparent to those skilled in the art that variations and modifications may be made without departing from the claims. Also, although the preferred embodiment has been described in the context of a mobile communications device, in which it is most advantageously used because of the variations in ambient light conditions that commonly occur, the concepts described herein can be applied to any device having a display for text or the like including telephones, personal computers and other such devices.

## Claims

1. A method for setting or varying at least one property of at least one display element (2) on a visual display (322) based on at least one characteristic of ambient light, the method comprising the steps of:
sensing at least one characteristic of ambient light; and
setting or varying at least one property of at least one display element (2) on the visual display (322) based on the at least one characteristic of ambient light.

2. The method of claim 1 wherein the at least one characteristic of ambient light comprises intensity or spectral composition, or both.

3. The method of claim 1 or claim 2 wherein the at least one property of the at least one display element comprises size or colour or boldness, or any combination thereof.

4. The method of claim 3 wherein the step of setting or varying comprises varying the size or colour or boldness, or any combination thereof, of the at least one display element in inverse proportion to a variation in an intensity of the ambient light.

5. The method of claim 3 wherein the step of sensing comprises a spectrum analysis and the at least one colour is set or varied in proportion to a variation in the spectral composition of the ambient light.

6. A device for setting or varying at least one property of at least one display element (2) on a visual display (322) based on at least one characteristic of ambient light, comprising
at least one light sensor (410) for sensing a characteristic of the ambient light,
at least one processor (338), for determining the at least one characteristic of ambient light and setting or varying the at least one property of the at least one display element (2) based on the at least one characteristic of ambient light,
at least one driver for applying the at least one property to the at least one display element (2), and
at least one visual display (322) for displaying the at least one display element (2).

7. The device of claim 6 wherein the at least one characteristic of ambient light comprises intensity or spectral composition, or both.

8. The device of claim 6 or claim 7 wherein the at least one property of the at least one display element comprises size or colour or boldness, or any combination thereof.

9. The device of claim 8 wherein the processor sets or varies the size or colour or boldness, or any combination thereof, of the at least one display element in inverse proportion to a variation in an intensity of the ambient light.

10. The device of claim 8 wherein the processor sets or varies the at least one colour in proportion to a variation in a spectral composition of the ambient light.

11. A communication device comprising a device as claimed in any one of claims 6 to 10.

## Amended claims

### Amended claims in accordance with Rule 86(2) EPC.

**1.** A method for setting or varying at least one property of at least one of text or an image on a visual display (322) based on at least one characteristic of ambient light, the method comprising the steps of:
sensing a spectral composition of ambient light; and
setting or varying at least one colour of at least one of the text or image on the visual display (322) to improve visibility of the text or image based on the sensed spectral composition of ambient light.

**2.** The method of claim 1 wherein the step of setting or varying comprises varying the colour of the text or image in inverse proportion to a variation in the spectral composition of the ambient light.

**3.** The method of claim 2 wherein the step of setting or varying is performed using a digital filter.

**4.** The method of claim 2 wherein the step of sensing further comprises sensing an intensity of the ambient light and the step of setting or varying comprises setting or varying a boldness of the text or image in inverse proportion to a variation in the intensity of the ambient light.

**5.** The method of claim 1 wherein the step of setting or varying comprises setting or varying at least one colour of at least one of the text or image based on settings previously manually entered by a user.

**6.** A device for setting or varying at least one property of text or an image on a visual display (322) based on at least one characteristic of ambient light, comprising
at least one light sensor (410) for sensing a characteristic of the ambient light,
at least one processor (338), for determining the at least one characteristic of ambient light and setting or varying the at least one property comprising colour or boldness of the text or image based on the at least one characteristic of ambient light,
at least one driver for applying the at least one property to the text or image, and
at least one visual display (322) for displaying the text or image.

**7.** The device of claim 6 wherein the at least one characteristic of ambient light comprises intensity or spectral composition, or both.

**8.** The device of claim 7 wherein the processor sets or varies the colour or boldness of the text or image in inverse proportion to a variation in an intensity or in proportion to a variation in spectral composition of the ambient light.

**9.** The device of claim 6 further comprising means for storing settings manually entered by a user, wherein the at least one colour of at least one of the text or image is varied based on stored settings.

**10.** A communication device comprising a device as claimed in any one of claims 5 to 8.
